# EUROPÄISCHE PATENTSCHRIFT

(11) **EP 2 446 997 B1**
(45) Veröffentlichungstag und Bekanntmachung des Hinweises auf die Patenterteilung: **13.04.2016**
(21) Anmeldenummer: 11180039.7
(22) Anmeldetag: 05.09.2011
(51) Int. Cl.: B01D 33/056, B01D 33/06, B23Q 11/00, B23Q 11/10

(54) **Filtervorrichtung insbesondere zur Reinigung von Kühlschmierstoffen**
Filter device, in particular for cleaning cooling lubricants
Dispositif de filtre, notamment pour le nettoyage de lubrifiants réfrigérants

(30) Priorität: 27.10.2010 CH 17802010
(43) Veröffentlichungstag der Anmeldung: 02.05.2012
(73) Patentinhaber: Schmid AG, 9496 Balzers (LI)
(72) Erfinder: Schmid, Marco, 9496 Balzers (LI)
(74) Vertreter: Hasler, Erich

(56) Entgegenhaltungen:
- EP-A2- 0 381 355
- DE-A1-102008 042 817
- US-A- 2 983 383
- US-A- 4 591 434

## Beschreibung

### Gebiet der Erfindung

Die Erfindung betrifft eine Filtervorrichtung insbesondere zum Reinigen von Kühlschmierstoffen gemäss Oberbegriff des Anspruchs 1.

### Stand der Technik

Bei der spanabhebenden Bearbeitung werden Kühlschmierstoffe, d.h. Emulsionen oder Öle zur Kühlung und Schmierung der Werkzeugmaschinen und zum Abtransport von Spänen, Abrieb usw. verwendet. Um den eingesetzten Kühlschmierstoff mehrfach verwenden zu können, wird dieser in einer Filtervorrichtung regeneriert und der oder den Werkzeugmaschinen erneut zugeführt. Zur Reinigung der Kühlschmierstoffe sind insbesondere Filtereinheiten mit integriertem Bandfilter bekannt, welche als Filtermaterial ein Filtervlies verwenden. Das Filtervlies ist auf einem umlaufenden Trägerband aufgebracht und wird durch Bewegung des Trägerbands ständig erneuert. Auch sind als Filtereinheiten zur Regenerierung des Kühlschmierstoffs beispielsweise Filtertrommeln oder Siebböden bekannt.

Eine Filtervorrichtung des Stands der Technik weist eine oben beschriebene Filtereinheit auf, welche auf einem Sammeltank angeordnet ist. Der zu reinigende Kühlschmierstoff tritt in die Filtereinheit ein, verlässt die Filtereinheit gereinigt und läuft direkt in den sich unter der Filtereinheit befindlichen Sammeltank. Neben der Filtereinheit sind auf dem Sammeltank u. a. ein Schaltschrank, diverse Pumpen zur Rückführung des gereinigten Kühlschmierstoffs und eine Wartungsöffnung angeordnet. Diese Komponenten benötigen auf dem Sammeltank eine beträchtliche Stellfläche. Da der Sammeltank quaderförmige Gestalt besitzt, ist auch der Stellflächenbedarf des Sammeltanks durch den Flächenbedarf der Komponenten vorgegeben.

In der DE 10 2008 042 817 ist eine Vorrichtung zur Behandlung von Abfallarbeitsflüssigkeit offenbart. Die Vorrichtung beinhaltet einen Abfallflüssigkeitstank, eine Pumpe zum Befördern der in dem Abfallflüssigkeitstank aufgenommenen Abfallarbeitsflüssigkeit, einen ersten und zweiten Filter zum Filtern der durch die Pumpe beförderten Arbeitsflüssigkeit und ein Steuermittel zur Steuerung der Pumpe in Abhängigkeit von den Druckverhältnissen in dem Filter. Das Steuermittel ist in einem Schaltschrank aufgenommen. Der Abfallflüssigkeitstank ist an der oberen Oberfläche einer Haltebasis angeordnet. Auf dem Abfallflüssigkeitstank ist die Pumpe angeordnet. Der erste und zweite Filter sind auf einer Wanne angeordnet, welche als ein Arbeitsflüssigkeitsspeichertank dient. Diese Wanne ist oberhalb der Pumpe angeordnet und ist durch Haltesäulen an der Haltebasis abgestützt. Die beschriebene Anordnung der Filter ermöglicht eine Reduzierung der benötigten Stellfläche der Vorrichtung. Die Vorrichtung besitzt jedoch trotz dieser Anordnung der Filter eine grosse Längserstreckung. Dies liegt zum einen daran, dass auf der Haltebasis im Anschluss an eine der Stirnseiten des im Wesentlichen quaderförmigen Abfallflüssigkeitstanks auch noch der Schaltschrank angeordnet ist. Zum anderen ist der Abfallflüssigkeitstank liegend auf der Haltebasis angeordnet, was die Längserstreckung bzw. den Stellflächenbedarf der Haltebasis ebenfalls erhöht.

Die EP 0 381 355 offenbart eine Methode und eine Vorrichtung zur Filterung von Speiseöl. Das gebrauchte Speiseöl wird über ein Sieb in einen Sammeltank geführt. Eine Pumpe, welche oberhalb des Sammeltanks in einem Schrank angeordnet ist, pumpt das Speiseöl in einen Druckkessel. Der Druckkessel ist oberhalb der Pumpe in einen Boden fest eingebaut. Das gebrauchte Speiseöl wird seitlich in den Druckkessel aufgegeben, durch ein Sieb und ein Filterpad gepresst und verlässt die Vorrichtung durch ein Rohr, welches am Boden des Druckkessels befestigt ist. An das Rohr kann mittels eines Bajonettverschlusses ein Schlauch befestigt sein, durch welches das gereinigte Speisefett einem Kochgerät zuführbar ist.Die US 4,591,434 beschreibt eine Zweifachfilter-Vorrichtung zur Filterung von Fritteusenfett. Die Vorrichtung umfasst einen Wagen mit einer oberen und einer unteren Kammer. Die Kammern sind durch einen Zwischenboden voneinander getrennt. Ein Patronenfilter ist teilweise in der oberen Kammer angeordnet und ragt aus der Oberseite der oberen Kammer. In einer ersten Pumprichtung wird gebrauchtes Fritteusenfett aus einer Fritteuse gesaugt und durch den Patronenfilter gepresst. Das gereinigte Fett fliesst in die untere Kammer, wo es gesammelt wird. In einer zweiten Pumprichtung wird das Fett aus der unteren Kammer gesaugt und in die Fritteuse zurück gepumpt.

In der US 2,983,383 ist ein Bandfilter zur Reinigung von Flüssigkeiten beschrieben. Auf ein bandförmiges Filterpapier wird die zu filternde Flüssigkeit aufgegeben. Das Filterpapier ist von einem endlosen Band getragen, welches aus Drahtgeflecht gefertigt ist. Die Filterwirkung wird durch ein Teilvakuum verstärkt, welches an der Unterseite des sich kontinuierlich bewegenden Bandes angelegt ist. Die gereinigte Flüssigkeit wird in einer Auffangwanne gesammelt, welche unterhalb des Bandes angeordnet ist. Durch einen Überlauf wird die Flüssigkeit auf einem bestimmten Füllstand gehalten. Die übergelaufene gereinigte Flüssigkeit wird in einem Kreislauftank gesammelt, welcher unterhalb der Auffangwanne angeordnet ist. Die Aggregate, welche zum Betrieb des Bandfilters notwendig sind, sind insbesondere eine Luftpumpe zur Herstellung des oben beschriebenen Teilvakuums, ein Motor mit Untersetzung zum Antrieb des endlosen Bandes und des Filterpapiers und eine Flüssigkeitspumpe, um die gereinigte Flüssigkeit dem jeweiligen Verbraucher bereit zu stellen. Um eine ausreichende Filterwirkung sicher zu stellen, müssen das Filterpapier und das Band über eine ausreichende Länge aufgespannt sein. Dies führt direkt zu einer grossen benötigten Stellfläche des Bandfilters. Der grosse Stellbedarf wird noch weiter vergrössert, indem der Kreislauftank, die Luftpumpe, der Motor und die Flüssigkeitspumpe auf einer gemeinsamen Trägerplatte angeordnet sind.

Aus diesen Ausführungen ist ersichtlich, dass Filtervorrichtungen des Stands der Technik einen grossen Stellflächenbedarf besitzen. Dies ist insbesondere deshalb unerwünscht, da die Stellflächen in den jeweiligen Maschinenhallen aus Kostengründen regelmässig sehr knapp bemessen sind.

Ein weiterer Nachteil ist darin zu sehen, dass Filtervorrichtungen des Stands der Technik nur unter grossem Aufwand zu verkleiden sind, da die einzelnen Komponenten unterschiedliche Abmessungen haben und darüber hinaus jederzeit zugänglich sein müssen. Dementsprechend verschmutzungsanfällig sind diese Filtervorrichtungen.

### Aufgabe der Erfindung

Aufgabe der Erfindung ist es daher eine Filtervorrichtung zu schaffen, welche einen möglichst kleinen Stellflächenbedarf aufweist. Ein weiteres Ziel ist es eine Filtervorrichtung zu zeigen, deren Komponenten einfach zu verkleiden sind.

### Beschreibung

Erfindungsgemäss wird die Aufgabe bei einer Vorrichtung gemäss Oberbegriff des Anspruchs 1 dadurch gelöst, dass die Nebenaggregate auf einer ersten Stellebene angeordnet sind, welche der Abdeckung des Sammeltanks entspricht, und die Filtereinheit auf einer zweiten Stellebene angeordnet ist, welche oberhalb der Nebenaggregate angeordnet ist. Durch die Anordnung der Filtereinheit oberhalb der Nebenaggregate, bedarf es auf der ersten Stellebene keines Stellplatzes mehr für die Filtereinheit. Dem gemäss ist die Stellflächenbedarf des Sammeltanks, welcher gleichzeitig dem Stellflächenbedarf der gesamten Filtervorrichtung entspricht, gegenüber vergleichbaren Filtervorrichtungen des Stands der Technik um bis zu 50% reduziert. Dies bringt den grossen Vorteil mit sich, dass sich bei der Planung des Stellflächenbedarfs, beispielsweise in Produktionshallen, geringe und entsprechend kostengünstige Stellflächen einkalkuliert werden können. Ferner werden durch den kleinen Stellflächenbedarf die Aufstellungsmöglichkeiten verbessert. Durch die sich ergebende äusserst kompakte rechteckige Bauweise der Filtervorrichtung ist auch eine Verkleidung selbiger ohne Aufwand ermöglicht.

In einem bevorzugten Ausführungsbeispiel ist zwischen der Filtereinheit und den Nebenaggregaten eine Auffangwanne angeordnet, welche mit dem Sammeltank in Strömungsverbindung steht. Die Auffangwanne ermöglicht, das aus der Filtereinheit nach unten ausströmende Filtrat zu sammeln und gesammelt weiterzuleiten.

Mit Vorteil ist die Auffangwanne in die zweite Stellebene integriert. Die Rahmenkonstruktion, welche die zweite Stellebene definiert, ist offen gestaltet und eignet sich demnach sehr gut für die Halterung der Auffangwanne. Die Auffangwanne kann in die Rahmenkonstruktion eingehängt sein und dadurch rasch entnehmbar sein. Reinigungs- und Wartungsvorgänge sind durch die entnehmbare Wanne ohne Aufwand durchzuführen.

Von Vorteile erweist es sich, wenn die zweite Stellebene durch eine Mehrzahl von Stützen von der ersten Stellebene beabstandet ist. Die Stützen sind kostengünstig, bieten eine ausreichende Stabilität und können einer Verkleidung der Nebenaggregate als Halterung dienen.

Zweckmässigerweise entspricht die Länge der Stützen mindestens der Höhe des Nebenaggregats mit der grössten Höhe. Die Höhe der zweiten Stellebene ist dadurch durch das Nebenaggregat mit der grössten Höhe bestimmt. Üblicherweise ist dies der Schaltschrank, welcher dadurch bündig mit der ersten und zweiten Stellebene abschliesst. Es versteht sich, dass ein oder mehrere Nebenaggregate auch eine grössere Höhe als die Stützen haben können. Dann ist die zweite Stellebene kleiner als die erste Stellebene und wird von den höheren Nebenaggregaten überragt. Letztgenannte Ausführung macht insbesondere dann Sinn, wenn die Filtereinheit auf der zweiten Stellebene einen geringeren Platzbedarf hat als die Nebenaggregate. Auch könnten die Nebenaggregate auf die erste und zweite Stellebene aufgeteilt sein Vorteilhaft steht die Auffangwanne mit einem Fallrohr mit dem Sammeltank in Strömungsverbindung. Das Filtrat überwindet den Abstand zwischen den beiden Stellebenen demnach platzsparend an einer Stelle an dem das Fallrohr der Anordnung und der Zugänglichkeit der Nebenaggregate nicht im Weg ist. Die Anordnung des Fallrohrs erfolgt daher vorzugsweise in kurzem Abstand zu einer Stütze.

Von Vorteil erweist es sich, wenn das Fallrohr als eine der Stützen vorgesehen ist. Diese Ausführungsform ist besonders platzsparend, da in dem Raum zwischen den Stellebenen der Platzbedarf für eine der Stützen eingespart werden kann.

In einer weiteren bevorzugten Ausführungsform ist an der zweiten Stellebene eine Schnittstelle zur mechanischen und elektrischen Verbindung der Filtereinheit mit der zweiten Stellebene vorgesehen. Dadurch ist es ermöglicht, dass Filtereinheiten mit denselben G rundflächenabmessungen rasch austauschbar sind, indem eine Filtereineinheit von der Rahmenkonstruktion der zweiten Stellebene gehoben wird, und die elektrische Verbindung unterbrochen wird. Durch Aufsetzen einer weiteren Filtereinheit wird die elektrische Verbindung zwischen der Filtereinheit und den Nebenaggregaten automatisch hergestellt. Beispielsweise ist ein Vliesfilter daher rasch gegen einen Trommelfilter austauschbar. Die Filtervorrichtung ist demnach ein flexibles Baukastensystem, welches rasch an die jeweiligen Benutzeranforderungen anpassbar ist.

Mit Vorteil hat der zwischen der ersten und zweiten Stellebene gebildete Raum eine Aussenverkleidung. Die rechteckige Formgebung der Freiräume zwischen den Stützen ermöglicht es, dass eine einfache Verkleidung durch vier rechteckige Platten herstellbar ist. Sind diese an den Stützen einhängbar, so ist die Aussenverkleidung, beispielsweise für Wartungsarbeiten, rasch entfernbar. Die Aussenfläche schützt nicht nur die Nebenaggregate vor der Umgebung, sondern gleichwohl die Umgebung vor dem Kühlschmierstoff, falls Kühlschmierstoff den Kreislauf in Form von Sprühnebel verlassen sollte oder ein Leck auftreten sollte. Auch ist ein Benutzer der Filtervorrichtung durch die Verkleidung vor den Nebenaggregaten geschützt. Denkbar wäre es auch, dass die Filtervorrichtung zylinderförmige Gestalt besitzt. Diese Ausführungsform hat den Vorteil, dass handelsübliche Sammeltanks in Zylinder- bzw. Fassgestalt in grosser Auswahl kostengünstig erwerbbar sind.

Dadurch dass an der Aussenverkleidung vorzugsweise wenigstens eine Wartungsöffnung vorgesehen ist, sind die Nebenaggregate rasch zugänglich, ohne dass die Aussenverkleidung demontiert werden müsste.

Mit Vorteil besitzen die erste und die zweite Stellebene und der Boden des Sammeltanks im Wesentlichen dieselben Aussenabmessungen. Dadurch besitzt die Filtervorrichtung eine quader- oder zylinderförmige Gestalt mit definierten Aussenabmessun gen ohne Vorsprünge oder Überständen. Vorstehende Gestaltgebung erleichtert es daher für die Filtervorrichtung einen Stellplatz zu finden, insbesondere falls das räumliche Angebot eingeschränkt ist.

In einer bevorzugten Ausführungsform hat der Boden des Tanks eine Stellfläche von 0,5 bis 1,5 m² bevorzugt von 0,7 bis 1,3 m² und ganz besonders bevorzugt von 0,8 bis 1 m². Die Bodenfläche ist daher auf das Minimum reduziert und lediglich durch die benötigte Stellfläche der Nebenaggregate bestimmt.

Zweckmässigerweise hat die zweite Stellebene einen Abstand zum Boden des Sammeltanks, welcher zwischen 1 und 2 m, bevorzugt zwischen 1,3 und 1,6 m und ganz besonders bevorzugt zwischen 1,4 und 1,5 m liegt. Die Filtereinheit befindet sich in diesem Bereich in einer optimalen Arbeitshöhe und ist ohne Aufwand gegen eine alternative Filtereinheit austauschbar.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine perspektivische Ansicht einer Filtervorrichtung, wie sie aus dem Stand der Technik bekannt ist;
- Figur 2:: eine Vorderansicht eines Ausführungsbeispiels der erfindungsgemässen Filtervorrichtung;
- Figur 3:: eine Seitenansicht der Filtervorrichtung aus Figur 2;
- Figur4:: eine perspektivische Ansicht der Filtervorrichtung aus Figur 2; und
- Figur 5:: eine perspektivische Explosionsdarstellung der Filtervorrichtung aus Figur 2.

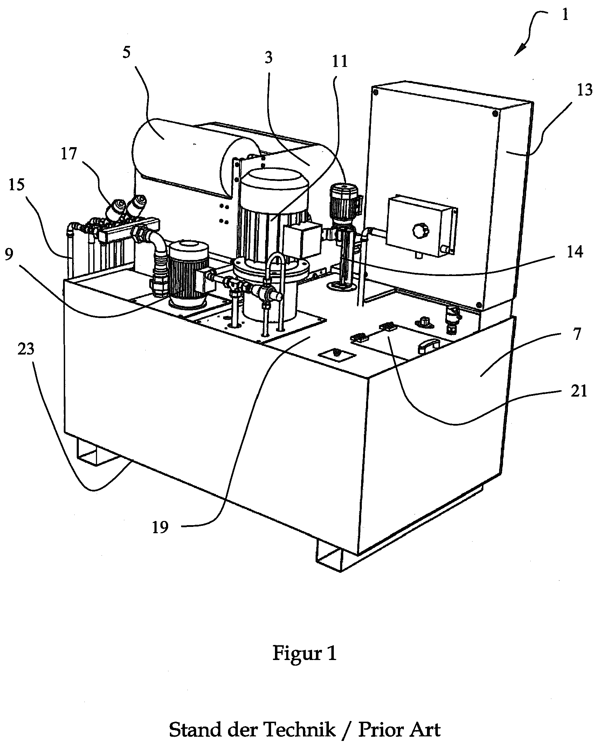

Die Figur 1 zeigt eine Filtervorrichtung des Stands der Technik, welche gesamthaft mit dem Bezugszeichen 1 bezeichnet ist. Die Filtervorrichtung 1 dient der Reinigung eines Kühlschmierstoffs, welcher der Kühlung und Schmierung einer nicht dargestellten Werkzeugmaschine dient. Der Kühlschmierstoff transportiert Späne und Verunreinigungen von der Werkzeugmaschine weg und wird einer Filtereinheit 3 aufgegeben, welche das Hauptaggregat der Filtervorrichtung 1 darstellt. Mittels eines abrollbaren Vliesbands 5 wird der Kühlschmierstoff regeneriert und fliesst gereinigt in einen Sammeltank 7. Zur Rückführung des gefilterten Kühlschmierstoffs kommen eine Niederdruckpumpe 9 und eine Hochdruckpumpe 11 zur Anwendung. Von diesen Pumpen 9,11 sind nur die Motoren in Figur 1 sichtbar, da sich die Pumpenlaufräder innerhalb des Sammeltanks 7 zum Ansaugen des Kühlschmierstoffs befinden. Zur Steuerung des Filterprozesses und zur elektrischen Versorgung der vorstehenden Aggregate ist eine Steuerungselektronik vorgesehen, welche in einem Schaltschrank 13 angeordnet ist. Die Aggregate, ausser Filtereinheit 3 und Sammeltank 7, sollen in diesem Dokument vorzugsweise als Nebenaggregate bezeichnet sein. Ferner umfasst die Filtervorrichtung 1 neben optionalen Nebenaggregaten, wie einer Niveaukontrolle 14, Anschlüsse 15 zur Verbindung mit einer oder mehreren Werkzeugmaschinen und Absperrventilen 17.

Wie Figur 1 zeigt, sind die Filtereinheit 3 und vorstehende Nebenaggregate auf der Abdeckung 19 des Sammeltanks 7 angeordnet. Ferner muss an der Abdeckung 19 auch noch Platz für eine Einfüll- und Wartungsöffnung 21 vorgesehen sein. Die Grösse der Abdeckungsfläche 19 ist daher durch die Stellfläche definiert, welche die Filtereinheit 3 und die Nebenaggregate benötigen. Da der Sammeltank 7 eine quaderförmige Gestalt besitzt, besitzt der Boden 23 des Sammeltanks 7, welcher auch den Stellflächenbedarf der Filtervorrichtung 1 definiert, die gleiche Fläche wie die Abdeckung 19. Die Filtervorrichtung 1 besitzt einen Stellflächenbedarf von typischerweise mindestens 1,5 m². Figur 1 zeigt, dass die Aggregate nicht verkleidet sind, da eine Verkleidung relativ aufwändig herzustellen ist.

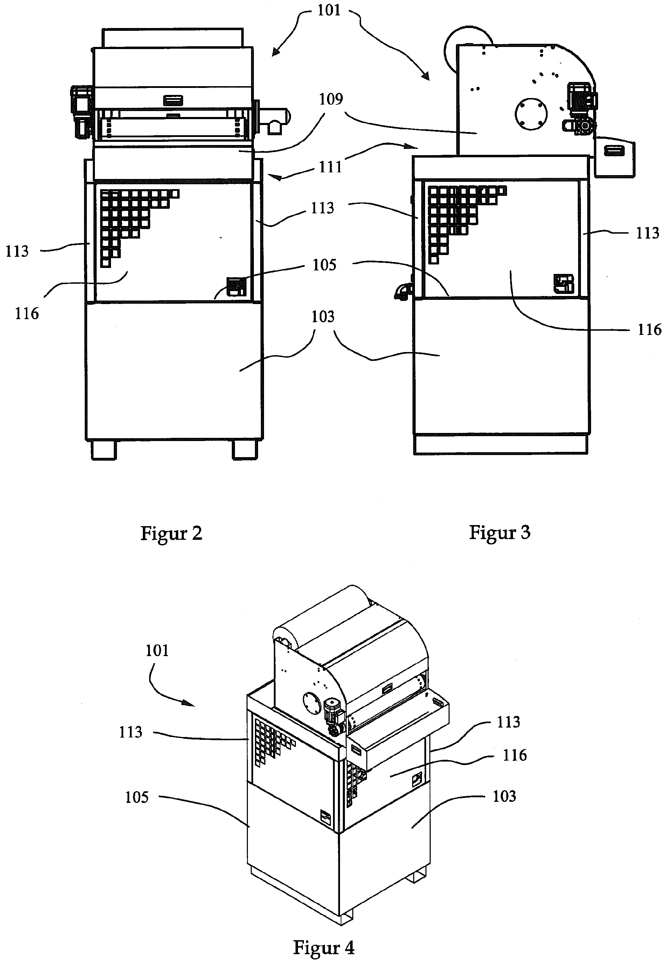

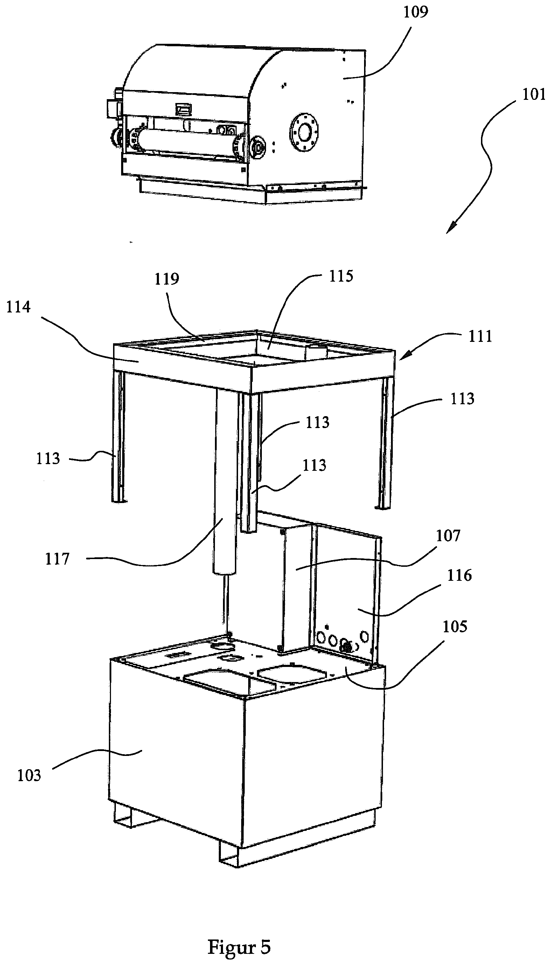

In den Figuren 2 bis 5 ist eine Ausführungsform der erfindungsgemässen Filtervorrichtung 101 gezeigt. Die Abdeckung des Sammeltanks 103 definiert eine erste Stellebene 105 (Figur 5). Auf dieser ersten Stellebene 105 sind wie bei der Filtervorrichtung 1 obenstehende Nebenaggregate angeordnet. Aus Gründen der Übersichtlichkeit wird in Figur 5 auf eine Darstellung der Nebenaggregate verzichtet und es ist nur der Schaltschrank 107 dargestellt. Eine Filtereinheit 109, welche das Hauptaggregat der Filtervorrichtung 101 darstellt, ist auf einer zweiten Stellebene 111 angeordnet.

Die zweite Stellebene 111 ist durch vier Stützen 113 getragen und durch selbige von der ersten Stellebene 105 beabstandet. Die Stützen 113 sind durch eine Rahmenkonstruktion 114 verbunden, welche die Filtereinheit 109 tragen. Die vier Stützen 113 und die erste und zweite Stellebene 105,111 definieren einen Raum, in welchem die Nebenaggregate aufgenommen sind. Da dieser Raum im Wesentlichen kubische oder quaderförmige Abmessungen hat, ist dieser besonders einfach zu verkleiden. Eine solche Verkleidung kann beispielsweise durch vier Blechteile 116 gebildet sein, welche an den vier Stützen 113 lösbar befestigt sind. Der Zugang zu dem Raum kann durch Lösen eines der Blechteile 116 ermöglicht sein. Alternativ kann in einem der Blechteile eine Wartungsöffnung vorgesehen sein. Durch die erfindungsgemässe Anordnung der Filtereinheit 109 und der Nebenaggregate auf einer ersten und zweiten Stellebene 105,111 lässt sich der Stellflächenbedarf des Sammeltanks 103, welcher auch dem Stellflächenbedarf der Filtervorrichtung 101 entspricht, signifikant verkleinern. Der Stellflächenbedarf der Filtervorrichtung ist daher nur durch die Fläche des Bodens 121 des Sammeltanks 103 definiert Der Stellflächenbedarf lässt sich im Vergleich zum Stand der Technik von etwa 1,5 m2 auf vorzugsweise 0,8 m oder weniger reduzieren, da auf der ersten Stellebene 105 kein Stellplatz für die Filtereinheit 109 vorzusehen ist. Es versteht sich, dass diese Zahlenangaben für ein Ausführungsbeispiel der Filtervorrichtung 101 gelten. Selbstverständlich sind auch grössere und kleinere Filtervorrichtungen möglich, um einen höheren oder geringeren Durchsatz an Kühlschmierstoff zu erzielen, für die diese Zahlenangaben nicht gelten. Die Verhältnisangabe, dass sich der benötigte Stellflächenbedarf der erfinddungsgemässen Filtervorrichtung im Vergleich zu Filtervorrichtungen des Stands der Technik um 50 % und mehr verringern lässt, ist jedoch für Filtervorrichtungen aller hergestellten Grössen gültig.

In die zweite Stellebene 111 ist eine Auffangwanne 115 integriert. Die Auffangwanne 115 sammelt das gereinigte Filtrat aus der direkt oberhalb angeordneten Filtereinheit 109. Die Auffangwanne 115 steht mit dem Sammeltank 103 durch ein Fallrohr 117 in Strömungsverbindung. Demnach wird das gereinigte Filtrat durch das Fallrohr 117 gesammelt in den Sammeltank 103 weitergeleitet.

Die zweite Stellebene 111 besitzt eine Aufnahme 119 für die Filtereinheit 109, bei welcher es sich, wie in den Figuren 2 bis 5 gezeigt, um einen Vliesfilter handelt. Die Aufnahme 119 ist jedoch auch dafür geeignet, andere Filtereinheiten, wie z.B. einen Trommelfilter, aufzunehmen. Die Filtervorrichtung 101 lässt sich daher individuell an die jeweiligen Kundenbedürfnisse anpassen, indem die Filtereinheit 109 abhebbar ist und durch eine andere Filtereinheit austauschbar ist. Die Filtereinheit 109 befindet sich in einer angenehmen Arbeitshöhe von etwa 1,4 m, was zur weiteren Erleichterung des Austausches oder der Wartung der Filtereinheit 109 führt.

Die Filtereinheit ist äusserst kompakt aufgebaut und reduziert die benötigte Stellfläche gegenüber dem Stand der Technik um bis zu 50%. Ferner ist durch die Austauschbarkeit der Filtereinheit ein hohes Mass an Flexibilität gegeben.

### Legende:

- 1: Filtervorrichtung des Stands der Technik
- 3: Filtereinheit
- 5: Vliesband
- 7: Sammeltank
- 9: Niederdruckpumpe
- 11: Hochdruckpumpe
- 13: Schaltschrank
- 14: Niveaukontrolle
- 15: Anschlüsse
- 17: Absperrventil
- 19: Abdeckung
- 21: Einfüll- und Wartungsöffnung
- 23: Boden
- 101: Filtervorrichtung
- 103: Sammeltank
- 105: Erste Stellebene
- 107: Schaltschrank
- 109: Filtereinheit
- 111: Zweite Stellebene
- 113: Stützen
- 114: Rahmenkonstruktion
- 115: Auffangwanne
- 116: Blechteile
- 117: Fallrohr
- 119: Filtereinheitaufnahme
- 121: Boden des Sammeltanks 103

## Patentansprüche

1. Filtervorrichtung (101) insbesondere zur Reinigung von Kühlschmierstoffen einer Werkzeugmaschine mit
- einer strombetriebenen Filtereinheit (109),
- einem Sammeltank (103), welcher mit der Filtereinheit (109) in Strömungsverbindung steht,
- einer Mehrzahl von Nebenaggregaten, insbesondere wenigstens eine Pumpe zur Förderung des Kühlschmierstoffs, eine Steuerelektronik, Regelventile und Anschlüsse, und
- einer ersten Stellebene (105), auf welcher die Nebenaggregate angeordnet sind,
**dadurch gekennzeichnet,**
- **dass** die erste Stellebene (105) auf dem Sammeltank (103) angeordnet ist und die strombetriebene Filtereinheit (109) auf einer zweiten Stellebene (111) angeordnet ist, welche oberhalb der Nebenaggregate vorgesehen ist, wodurch der Stellflächenbedarf der strombetriebenen Filtervorrichtung (101) durch die Fläche des Bodens (121) des Sammeltanks (103) definiert ist und
- **dass** an der zweiten Stellebene (111) eine Schnittstelle zur mechanischen und elektrischen Verbindung der Filtereinheit (109) mit der zweiten Stellebene (111) vorgesehen ist,
- sodass strombetriebene Filtereinheiten (109) mit denselben Grundflächenabmessungen rasch austauschbar sind und
- sodass durch Aufsetzen der Filtereinheit (109) eine elektrische Verbindung zwischen der Filtereinheit (109) und den Nebenaggregaten automatisch hergestellt wird und die elektrische Verbindung unterbrochen wird, wenn die Filtereinheit (109) von der Rahmenkonstruktion der zweiten Stellebene (111) gehoben wird.

2. Filtervorrichtung (101) nach Anspruch 1, **dadurch gekennzeichnet, dass** zwischen der Filtereinheit (109) und den Nebenaggregaten eine Auffangwanne (115) angeordnet ist, welche mit dem Sammeltank (103) in Strömungsverbindung steht.

3. Filtervorrichtung (101) nach Anspruch 2, **dadurch gekennzeichnet, dass** die Auffangwanne (115) in die zweite Stellebene (111) integriert ist.

4. Filtervorrichtung (101) nach einem der Ansprüche 1 bis 3, **dadurch gekennzeichnet, dass** die zweite Stellebene (111) durch eine Mehrzahl von Stützen (113) von der ersten Stellebene (105) beabstandet ist.

5. Filtervorrichtung (101) nach Anspruch 4, **dadurch gekennzeichnet, dass** die Länge der Stützen (113) mindestens der Höhe des Nebenaggregats mit der grössten Höhe entspricht.

6. Filtervorrichtung (101) nach einem der Ansprüche 2 bis 5, **dadurch gekennzeichnet, dass** die Auffangwanne (115) durch ein Fallrohr (117) mit dem Sammeltank (103) in Strömungsverbindung steht.

7. Filtervorrichtung (101) nach Anspruch 6, **dadurch gekennzeichnet, dass** das Fallrohr (117) eine der Stützen (113) bildet.

8. Filtervorrichtung (101) nach einem der Ansprüche 1 bis 7, **dadurch gekennzeichnet, dass** der zwischen der ersten und zweiten Stellebene (105,111) gebildete Raum eine Aussenverkleidung (116) hat.

9. Filtervorrichtung (101) nach einem der Ansprüche 1 bis 8, **dadurch gekennzeichnet, dass** die erste und die zweite Stellebene (105,11) und der Boden (121) des Sammeltanks (103) im Wesentlichen dieselben Aussenabmessungen besitzen.

10. Filtervorrichtung (101) nach Anspruch 9, **dadurch gekennzeichnet, dass** der Boden (121) des Sammeltanks (103) eine Stellfläche von 0,5 bis 1,5 m², bevorzugt von 0,7 bis 1,3 m² und ganz besonders bevorzugt von 0,8 bis 1 m² hat.

11. Filtervorrichtung (101) nach einem der Ansprüche 9 bis 10, **dadurch gekennzeichnet, dass** die zweite Stellebene (111) einen Abstand zum Boden (121) des Sammeltanks (103) hat, welcher zwischen 1 und 2 m, bevorzugt zwischen 1,3 und 1,6 m und ganz besonders bevorzugt zwischen 1,4 und 1,5 m liegt.

## Claims

1. Device for filtering (101), in particular for cleaning cooling lubricants of a machine tool with
- an electrically powered filtering unit (109),
- a collection tank (103) that is in fluidic connection with the filtering unit (109),
- a multitude of auxiliary units, in particular at least a pump for conveying the cooling lubricant, a control electronics, control valves and connections and
- a first resting plane (105) on which the auxiliary units are placed, **characterized in**
- **that** the first resting plane (105) is placed on the collection tank (103) and the electrically powered filtering unit (109) is placed on a second resting plane (111) that is provided above the auxiliary units so that the footprint requirement of the electrically powered filtering unit (109) is defined by the surface of the bottom (121) of the collection tank (103) and
- **that** an interface to the mechanical and electrical connection of the filtering unit (109) with the second resting plane (111) is provided on the second resting plane (111)
- so that electrically powered filtering units (109) with the same ground area dimensions can be quickly replaced and
- so that an electrical connection is automatically established between the filtering unit (10) and the auxiliary units by placing the filtering unit (109) and the electrical connection is interrupted when the filtering unit is lifted from the frame construction of the second resting plane (111).

2. Device for filtering (101) according to claim 1, **characterized in that** a collection tray (115) that is in fluidic connection with the collection tank (103) is placed between the filtering unit (109) and the auxiliary units.

3. Device for filtering (101) according to claim 2, **characterized in that** the collection tray (115) is integrated into the second resting plane (111).

4. Device for filtering (101) according to one of the claims 1 to 3, **characterized in that** the second resting plane (111) is spaced from the first resting plane (105) by a multitude of supports (113).

5. Device for filtering (101) according to claim 4, **characterized in that** the length of the supports (113) corresponds to at least the height of the auxiliary unit with the biggest height.

6. Device for filtering (101) according to one of the claims 2 to 5, **characterized in that** the collection tray (115) is in fluidic connection with the collection tank (103) by a downpipe (117).

7. Device for filtering (101) according to claim 6, **characterized in that** the downpipe (117) forms one of the supports (113).

8. Device for filtering (101) according to one of the claims 1 to 7, **characterized in that** the space formed between the first and the second resting plane (105, 111) has an outer cladding (116).

9. Device for filtering (101) according to one of the claims 1 to 8, **characterized in that** the first and the second resting plane (105, 111) and the bottom (121) of the collection tank (103) substantially have the same outer dimensions.

10. Device for filtering (101) according to claim 9, **characterized in that** the bottom (121) of the collection tank (103) has a footprint of 0,5 to 1,5 m2, preferably of 0,7 to 1,3 m2 and most preferably of 0,8 to 1 m2.

11. Device for filtering (101) according to one of the claims 9 to 10, **characterized in that** the second resting plane (111) has a distance to the bottom (121) of the collection tank (103) that is situated between 1 and 2, preferably between 1,3 and 1,6 m and most preferably between 1,4 and 1,5 m.

## Revendications

1. Dispositif de filtrage (101), en particulier pour le nettoyage de lubrifiants réfrigérants d'une machine-outil avec
- une unité de filtrage électrique (109),
- un réservoir de collecte (103) qui est en communication fluidique avec l'unité de filtrage (109),
- une multitude d'agrégats auxiliaires, en particulier au moins une pompe pour le refoulement du lubrifiant réfrigérant, un système électronique de commande, des vannes de régulation et des raccords et
- un premier plan de pose (105) sur lequel les agrégats auxiliaires sont placés, **caractérisé en ce**
- **que** le premier plan de pose (105) est placé sur le réservoir de collecte (103) et l'unité de filtrage électrique (109) est placée sur un second plan de pose (111), plan qui est prévu au-dessus des agrégats auxiliaires si bien que l'encombrement du dispositif de filtrage actionné par courant (101) est défini par la surface du fond (121) du réservoir de collecte (103) et
- **qu'**il est prévu, sur le second plan de pose (111), une interface pour la connexion mécanique et électrique de l'unité de filtrage (109) avec le second plan de réglage (111)
- si bien que des unités de filtrage actionnées par courant (109) avec les mêmes dimensions de surface de base peuvent être rapidement remplacées et
- si bien qu'en posant l'unité de filtrage (109) une connexion électrique entre l'unité de filtrage (109) et les agrégats secondaires est automatiquement réalisée et la connexion électrique est interrompue lorsque l'unité de filtrage (109) est soulevée de la construction de cadre du second plan de pose (111).

2. Dispositif de filtrage (101) selon la revendication 1, **caractérisé en ce qu'**un bac collecteur (115), qui est en communication fluidique avec le réservoir de collecte (103) est placé entre l'unité de filtrage (109) et les agrégats secondaires.

3. Dispositif de filtrage (101) selon la revendication 2, **caractérisé en ce que** le bac collecteur (115) est intégré au second plan de pose (111).

4. Dispositif de filtrage (102) selon l'une des revendications 1 à 3, **caractérisé en ce que** le second plan de pose (111) est espacé par une multitude de supports (113) du premier plan de pose (105).

5. Dispositif de filtrage (101) selon la revendication 4, **caractérisé en ce que** la longueur des supports (113) correspond au moins à la hauteur du groupe auxiliaire avec la plus grande hauteur.

6. Dispositif de filtrage (102) selon l'une des revendications 2 à 5, **caractérisé en ce que** le bac collecteur (115) est en communication fluidique avec le réservoir de collecte par un tuyau de descente (117).

7. Dispositif de filtrage (101) selon la revendication 6, **caractérisé en ce que** le tuyau de descente (117) forme l'un des supports (113).

8. Dispositif de filtrage (102) selon l'une des revendications 1 à 7, **caractérisé en ce que** l'espace formé entre le premier et le second plan de pose (105, 111) a un revêtement extérieur (116).

9. Dispositif de filtrage (102) selon l'une des revendications 1 à 8, **caractérisé en ce que** le premier et le second plan de pose (105, 111) et le fond (121) du réservoir de collecte (103) possèdent sensiblement les mêmes dimensions extérieures.

10. Dispositif de filtrage (101) selon la revendication 9, **caractérisé en ce que** le fond (121) du réservoir de collecte (103) a une surface de pose de 0,5 à 1,5 m², de préférence de 0,7 à 1,3 m² et de manière tout particulièrement préférée de 0,8 à 1m²_{.}

11. Dispositif de filtrage (102) selon l'une des revendications 9 à 10, **caractérisé en ce que** le second plan de pose (111) a une distance par rapport au fond (121) du réservoir de collecte (103) qui se situe entre 1 et 2 m, de préférence entre 1,3 et 1,6 m et de manière tout particulièrement préférée entre 1,4 et 1,5 m.
